Europäisches Patentamt

(19) European Patent Office

Office européen des brevets

(11) Numéro de publication : **0 124 483**
**B1**

(12) **FASCICULE DE BREVET EUROPÉEN**

(45) Date de publication du fascicule du brevet :
02.12.87

(21) Numéro de dépôt : **84810197.8**

(22) Date de dépôt : **26.04.84**

(51) Int. Cl.⁴ : **G 01 K   5/70, A 47 J 27/62,
H 01 H  37/66**

(54) Dispositif thermométrique avertisseur acoustique pour couvercle de récipient de cuisson.

(30) Priorité : **29.04.83 CH 2335/83**

(43) Date de publication de la demande :
**07.11.84 Bulletin 84/45**

(45) Mention de la délivrance du brevet :
**02.12.87 Bulletin 87/49**

(84) Etats contractants désignés :
**AT BE CH DE FR GB IT LI LU NL SE**

(56) Documents cités :
**DE-A- 2 605 892
DE-A- 2 909 129
US-A- 3 130 285**

(73) Titulaire : **MESINVEST N.V.
c/o Corporate Trust N.V. 16a Pietermaai
Curaçao Netherlands Antilles (NL)**

(72) Inventeur : **Favre, Charles-André
Chemin Cassinette 2
Lausanne (CH)**
Inventeur : **Winteler, Hans Rudolf
Chemin des Granges
Arzier (CH)**

(74) Mandataire : **Kirker, Gaylord Emile et al
c/o KIRKER & Cie S.A. 14, Rue du Mont-Blanc Case
postale 872
CH-1211 Genève 1 (CH)**

## Description

On connaît déjà des dispositifs avertisseurs acoustiques pour couvercles de récipients de cuisson, qui consistent en un sifflet adaptable au couvercle du récipient et qui fonctionne sous l'effet de la vapeur passant à travers lui lorsque du liquide chauffé dans le récipient arrive à ébullition et que, de ce fait, la pression de la vapeur, dans le récipient, augmente soudainement et oblige la vapeur à s'échapper en passant par le sifflet. Ces dispositifs ont toutefois l'inconvénient de n'indiquer que la température d'ébullition, alors que, dans la pratique, il serait utile d'avertir l'usager lorsqu'une température choisie, par exemple de 30 à 40 °C (fin de chauffage rapide) et/ou une température différente, par exemple une température de fin de cuisson (95° pour des récipients ordinaires ou 120 à 130 °C pour des récipients communément appelés marmites à vapeur sous pression).

On connaît aussi des constructions (DE-OS 2 605 892 et US 3.130.285) dans lesquelles un aimant permanent porté par une pièce tournante solidaire de l'extrémité mobile d'un élément thermométrique spiral bimétallique, est prévu pour commander un circuit électrique, conjointement avec un second aimant, fixe, lorsque la température mesurée par cet élément bimétallique atteint une température de consigne fixée d'avance. Mais une telle construction a le défaut que la commande en fonction de la température est rendue imprécise par un couple perturbateur produit par l'interaction des dits aimants lorsqu'ils coopèrent, couple qui déforme le spiral, du fait que l'un de ces aimants est mécaniquement solidaire de ce spiral bimétallique. Autre désavantage : s'il y a une butée, l'indication (spiral) reste bloquée ; sans butée, l'action de l'aimant cesse si la température est dépassée d'un certain montant. La présence d'un aimant mécaniquement solidaire du spiral augmente aussi l'inertie du système de mesure de température.

On connaît encore une construction (DE-OS 2 909 129) dans laquelle un aimant permanent porté par l'extrémité mobile d'un élément thermométrique spiral bimétallique, est prévu pour agir sur un interrupteur Hall lorsqu'une température de consigne est mesurée. Cette construction a les mêmes défauts que celles qui viennent d'être mentionnées, du fait que l'aimant est mécaniquement solidaire du spiral bimétallique.

La présente invention vise à fournir un dispositif thermométrique avertisseur acoustique pour couvercle de récipient de cuisson qui remédie aux inconvénients signalés des dispositifs connus, et elle a pour objet un dispositif thermométrique avertisseur acoustique pour couvercle de récipient de cuisson, qui est conforme à la revendication 1.

Le dessin annexé représente, à titre d'exemples, trois formes d'exécution du dispositif selon l'invention.

Fig. 1 est une vue en coupe axiale selon 1-1 de fig. 2, d'une première forme d'exécution, montrant les organes en place avant fixation du boîtier sur le couvercle du récipient.

Fig. 2 est une vue en coupe transversale selon 2-2 de fig. 1.

Fig. 3 est une vue analogue à fig. 1, partiellement en vue latérale, partiellement en coupe, montrant les organes en position du boîtier fixé sur le couvercle du récipient.

Fig. 4 est une vue partielle en plan correspondant à la fig. 1.

Les figures 5 à 9 sont des diagrammes explicatifs du fonctionnement de cette première forme d'exécution.

Fig. 10 est une vue analogue à la figure 1, mais relative à une deuxième forme d'exécution.

Fig. 11 est une vue en coupe transversale selon 11-11 de fig. 10.

Fig. 12 est une vue analogue à la fig. 1 mais relative à une troisième forme d'exécution.

Fig. 13 est une vue en plan correspondant à la fig. 12.

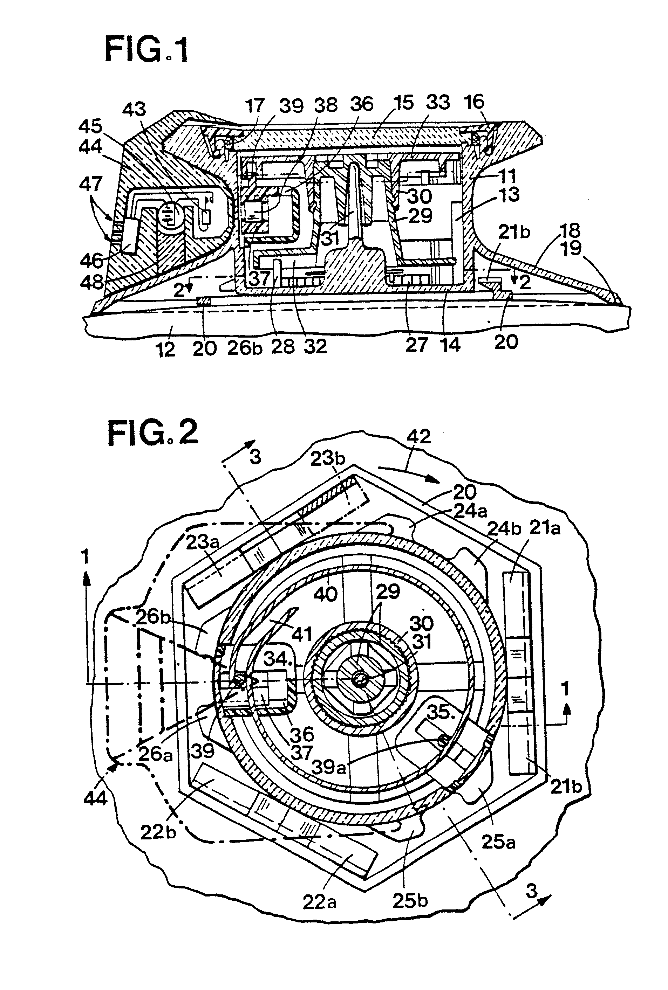

La première forme d'exécution, selon fig. 1 à 4, comprend un boîtier 11 en matière plastique telle que du polyethersulfone, destiné à être fixé sur un couvercle métallique de récipient de cuisson, visible partiellement en 12, pour former à la fois un bouton de couvercle et un indicateur de température.

Le boîtier 11 présente à son intérieur une chambre 13 qui est fermée, en bas, par un fond 14 faisant partie du boîtier 11, et en haut par une glace 15.

Cette glace est pressée en place contre la partie supérieure du corps 11 par une lunette 16 métallisée, s'encliquetant dans une rainure du boîtier 11. Un anneau d'étanchéité 17 est pressé par la lunette 16 pour fermer toute communication entre le bord de la glace 15 et la partie supérieure du corps 11. Le boîtier 11 présente une jupe 18 s'étendant extérieurement et obliquement vers le bas. Lorsqu'on veut fixer le boîtier 11 au couvercle 12, on le pose comme représenté sur la fig. 1, sur la partie centrale du couvercle 12, de façon qu'il repose sur ce couvercle par le bord extérieur circulaire 19 de la jupe 18. Le fond 14 se trouve alors à une certaine distance au-dessus du couvercle 12.

Pour assurer, d'une part la fixation du boîtier 11 au couvercle 12 et, d'autre part, la mise en contact étroit du fond 14, par toute sa surface, avec ce couvercle, il est prévu les moyens de fixation suivants : une pièce d'acier inoxydable 20 présentant, vue en plan (fig. 2) une forme hexagonale, est fixée au couvercle 12, par soudage. Trois des côtés de la pièce 20 situés à 120° l'un de l'autre sont munis chacun d'une partie recourbée vers l'intérieur 21a, 21b, 22a, 22b, 23a, 23b, séparées par une partie en V pour former arrêt de position. Le boîtier 11 présente dans sa partie latérale, mais à proximité du fond 14, trois paires de doigts 24a, 24b, 25a, 25b, 26a, 26b entre lesquels la partie en V vient s'engager.

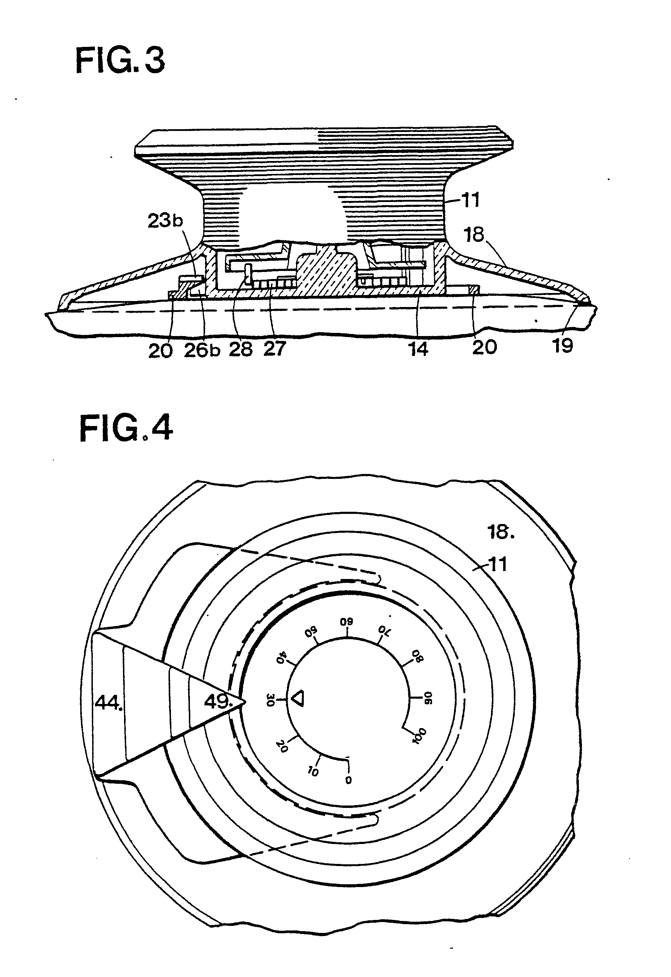

Pour fixer le corps 11 sur le couvercle, on presse axialement sur lui pour rapprocher le fond 14 du couvercle et on fait tourner de manière à engager les doigts 24a, 24b, 25a, 25b, 26a, 26b, de part et d'autre des parties en V de la pièce 20, comme représenté sur la fig. 3. Ce mécanisme constitue en fait une fixation à baïonnette. Ainsi, le fond 14 du corps 11 est fortement pressé contre le couvercle, ce qui assure une bonne transmission thermique de ce couvercle à ce fond. Les parties 21, 22, 23 sont légèrement élastiques mais suffisamment fortes pour assurer une pression du fond 14 contre le couvercle 12. Sous l'effet de cette force d'application, la matière du fond 14 se déforme élastiquement pour épouser exactement la forme du couvercle, ce qui est très important, comme il sera expliqué plus loin.

Pendant le mouvement de rapprochement du fond 14 jusqu'à faire contact avec le couvercle 12, la jupe 18 reste constamment en contact avec le couvercle par son bord 19, mais se déforme élastiquement pour passer de la position représentée à la fig. 1 à celle visible sur la fig. 2. Cette jupe forme ainsi une chambre fermée à l'intérieur de laquelle les moyens de fixation que l'on vient de décrire sont à l'abri de l'eau lorsqu'on nettoie le couvercle.

Un élément thermométrique spiral bimétallique 27 est disposé à plat contre la face intérieure du fond 14. Son extrémité interne est fixée au corps 11 tandis que son extrémité externe est libre et solidaire d'une goupille verticale 28. Un équipage tournant formé de deux pièces 29 et 30 encliquetées l'une sur l'autre, est monté sur un pivot central 31 solidaire du fond 14. Le doigt 28 est engagé dans une rainure radiale 32 prévue à la base de la partie inférieure 29 de l'équipage mobile. Ainsi, lorsque le doigt 28 se déplace angulairement sous l'effet d'une variation de température de l'élément thermométrique spiral 27, il entraîne en rotation l'équipage 29, 30. La partie supérieure 33 de l'équipage mobile a la forme d'un disque qui est visible à travers la glace 15. Il est prévu de préférence une échelle de températures sur la face interne de la glace 15, tandis que la face visible du disque 33 présente un repère se déplaçant en regard de cette échelle, pour indiquer la température mesurée par l'élément 27.

L'expérience a montré que le frottement entre l'élément métallique thermométrique 27 et le fond 14 en matière plastique est négligeable et n'a aucun effet sensible sur l'exactitude de la température indiquée par le dispositif. Elle a montré aussi que la transmission thermique du couvercle 12 à l'élément 27, par conduction à travers le fond 14, est excellente grâce au bon contact entre ce fond et le couvercle. D'ailleurs, il y a avantage à prévoir, comme représenté sur le dessin, que le fond 14 est plus mince que la paroi latérale du boîtier 11. Cela facilite l'adaptation du fond à la forme du couvercle et la transmission de chaleur à travers lui. De plus, on choisira avantageusement une couleur foncée pour le boîtier (de préférence noire) ce qui favorise le transfert de chaleur par rayonnement.

Le dispositif décrit comporte en outre des moyens que l'on va décrire maintenant et qui servent à donner un signal sonore lorsque la température mesurée par l'élément 27 atteint une valeur choisie d'avance.

A l'intérieur du corps 11, il est prévu deux petits boîtiers 34, 35 identiques, mais angulairement décalés l'un par rapport à l'autre comme on le voit sur la fig. 2. On ne décrira en détail que le boîtier 34. Ce boîtier comporte une rainure 36 dans laquelle peut glisser radialement une pièce mobile 37, en matière plastique, dans laquelle est logé un petit aimant permanent 38. Ce corps 37 présente à sa partie supérieure un doigt 39 destiné à coopérer avec une came 40 ayant la forme que l'on peut voir sur la fig. 2. La position des organes représentée sur la fig. 2 correspond à une température dans le récipient de 30 à 40 °C qui représente la fin du chauffage rapide des aliments. Dans cette position, le doigt 39 est engagé entre deux parties de la came 40 qui forment un canal oblique 41. La majeure partie de la came 40 est de forme circulaire.

On expliquera plus loin le fonctionnement en détail de la came et du doigt 39. Lorsque l'équipage mobile 29, 30 et avec lui la came 40 tournent dans le sens de la flèche 42, sous l'effet de l'élévation de la température, le doigt 39 est commandé par la came pour se trouver soit rapproché de la paroi du récipient 11, soit éloigné de celle-ci. Dans la position rapprochée, il agit sur un interrupteur 43 du type Reed qui comprend une lame fixe et une lame mobile en métal ferromagnétique, ces deux lames étant encloses dans une capsule étanche. Lorsque l'aimant 38 se trouve rapproché au maximum de l'interrupteur 43, celui-ci se ferme. Lorsque l'aimant 38 est amené dans sa position éloignée, cet interrupteur s'ouvre. Cet interrupteur est disposé dans un logement prévu dans un curseur circulaire 44 engagé sur le pourtour du corps 11 et capable de tourner à frottement doux sur la périphérie de ce corps. A l'intérieur du curseur 44, se trouvent une pile électrique 45 et un buzzer 46. La fermeture de l'interrupteur 43 a pour effet d'actionner le buzzer dont le son passe à l'extérieur à travers des orifices 47 du curseur. Ce curseur et avec lui les organes qu'il contient constituent un capteur-avertisseur acoustique. Un bouchon 48 est prévu pour permettre le remplacement de la pile 45.

Sur les fig. 2 et 4 on a représenté le curseur 44 dans une position correspondant à la température de 30°, c'est-à-dire au moment où l'usager doit être averti que cette température est atteinte. Pour être averti lorsque la température prédéterminée de, par exemple, 95 °C est atteinte, il suffit à l'usager de faire tourner le curseur 44 de façon que son index 49 se trouve en regard de cette température. Lorsque cette température est atteinte, ce sont alors les moyens disposés dans le boîtier 35 qui commanderont le signal acoustique.

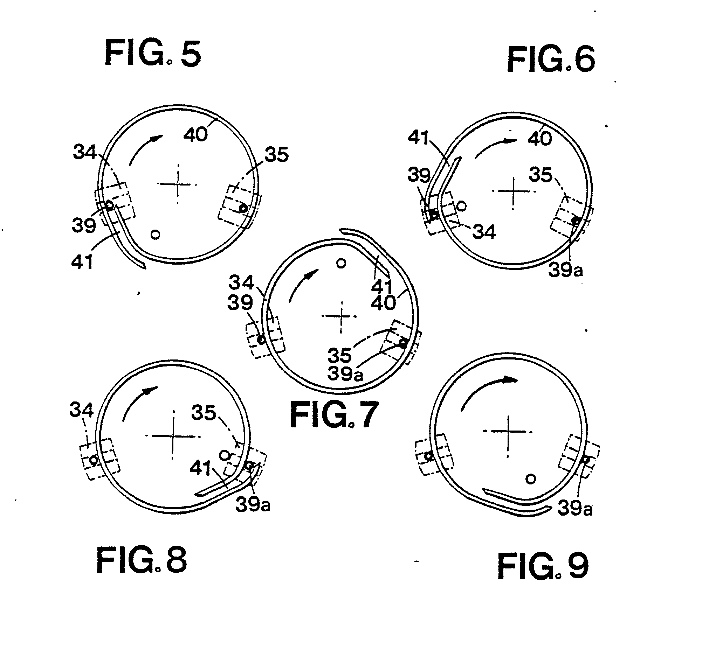

Les fig. 5 à 9 représentent la came 40 dans différentes positions angulaires correspondant à des températures mesurées allant de la température ambiante (fig. 5) à une température maximum qui peut être de 120 °C par exemple.

Sur la fig. 5, la came se trouve dans la position correspondant à la température ambiante, le doigt 39 se trouve à l'entrée du canal 41 et occupe sa position la plus rapprochée de l'axe du dispositif. Son aimant 38 (fig. 1) n'a pas d'effet sur l'interrupteur 43.

La fig. 6 représente la position des organes lorsque la température de fin de chauffage rapide (par exemple 30°) est atteinte. On voit que, pour passer de la fig. 5 à la fig. 6, le doigt 39 a suivi le canal 41 et a été obligé de ce fait par la came 40 de venir occuper sa position la plus rapprochée de l'interrupteur 43. Dans ces conditions, l'aimant 38 ferme le contact de l'interrupteur 43 et le signal acoustique est donné par le buzzer 46. L'usager étant averti par le signal, déplace angulairement le curseur 44 de la position où il se trouvait en regard de 34 pour l'amener en regard de 35, qui correspond à une température de cuisson de par exemple 95 °C. Dès lors la température continuant d'augmenter dans le récipient, l'équipage mobile continue de tourner, le buzzer ayant cessé de fonctionner et on passe par la position selon fig. 7. Pour cette position de l'équipage mobile, le doigt 39a de 35 qui est en contact avec le côté interne de la came 40, tandis que le doigt 39 est en contact avec le côté externe de cette came, se trouve dans sa position la plus rapprochée de l'axe de rotation. L'équipage mobile continuant de tourner avec la température qui augmente, le doigt 39a arrive à l'entrée du canal 41, ce qui le conduit dans la position représentée sur la fig. 8 où il se trouve alors dans sa position la plus éloignée de l'axe de rotation et, par conséquent, dans sa position la plus rapprochée de l'interrupteur 43. Dès lors, le buzzer fonctionne à nouveau pour signaler que la température maximum est atteinte. Si la température continue à monter jusqu'à par exemple 120 °C, les organes prennent la position représentée sur la fig. 9, pour laquelle le buzzer continue de fonctionner. L'usager arrête alors le chauffage, la came 40 tourne en sens inverse des flèches indiquées et revient progressivement dans la position selon fig. 5.

On voit de ce qui précède que le dispositif décrit permet de signaler acoustiquement lorsque la température du récipient atteint l'une ou l'autre de deux températures prédéterminées correspondant à la position angulaire de 34 et 35.

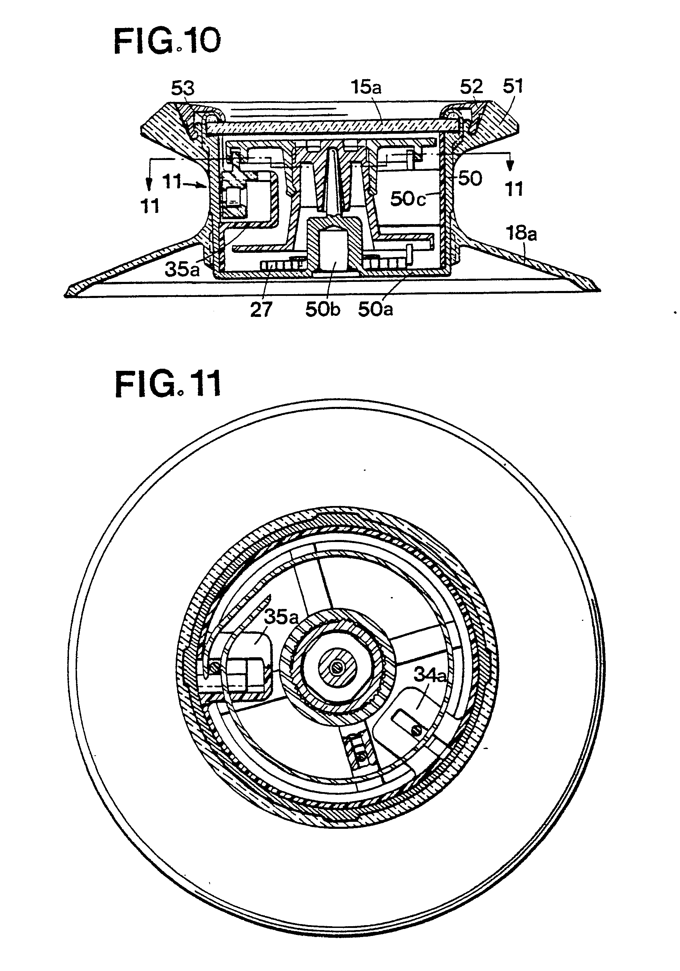

La forme d'exécution selon fig. 10 et 11 ne diffère de celle qui vient d'être décrite que sur certains points que l'on va décrire maintenant en se dispensant de décrire ce qui est inchangé.

Dans cette deuxième exécution, le corps du dispositif comprend une boîte métallique 50 sur la paroi latérale de laquelle sont fixés par encliquetage, d'une part une jupe 18a analogue à 18 et un anneau supérieur 51 en matière plastique sur lequel vient s'encliqueter une lunette 52 après que l'on ait enroulé annulairement la partie terminale supérieure de 50, comme on le voit en 53. Cette partie ainsi enroulée vient maintenir en place la glace 15a analogue à 15. Des anneaux d'étanchéité non représentés sont évidemment prévus pour fermer de façon étanche l'ensemble formé par la glace 15a et la boîte 50. Dans cet exemple, les moyens de fixation du boîtier 11 au couvercle non représenté sur les fig. 10 et 11 sont différents de ceux décrits à propos de la première forme d'exécution.

Le fond 50a de la boîte 50 présente, dans sa partie centrale, un évidement 50b dans lequel viennent s'engager des moyens de fixation du dispositif au couvercle du récipient.

Cette disposition constitue donc un limiteur de couple empêchant que l'on endommage le dispositif et le couvercle en agissant de façon trop énergique sur le boîtier pour visser l'écrou 62 sur la tige filetée 54b.

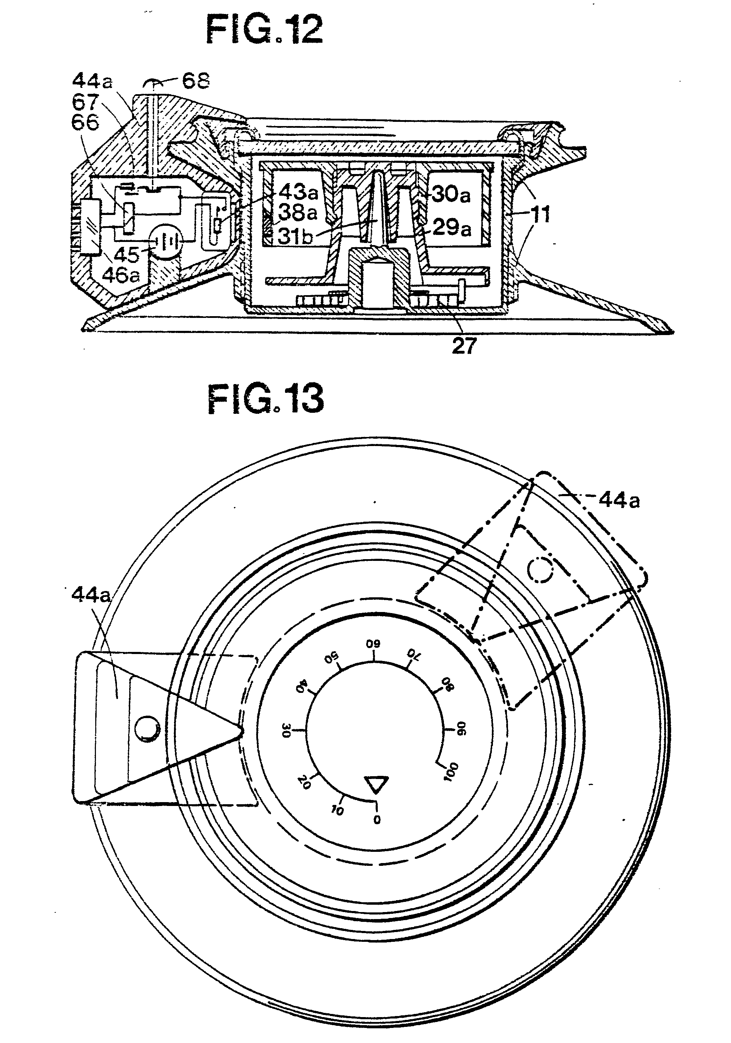

Dans la troisième forme d'exécution du dispositif représentée sur les fig. 12 et 13, la construction du boîtier est la même que celle représentée sur la fig. 10. On se bornera ici à décrire les différences entre cette troisième forme d'exécution et les précédentes.

L'équipage mobile comporte, comme sur la fig. 1 deux parties 29a, 30a emboîtées l'une sur l'autre et tournant sur un pivot 31b. Toutefois, la pièce 30a est dépourvue d'une came telle que 40 et il n'y a pas de parties telles que 34 et 35 dans lesquelles un aimant 38 est disposé pour glisser radialement. Un petit aimant permanent 38a est logé dans une partie de la paroi cylindrique de la pièce 30a et tourne donc avec l'équipage mobile.

Un curseur 44a de forme générale analogue à 44 de fig.1 est adapté sur le boîtier pour pouvoir être déplacé sur le pourtour de celui-ci. A l'intérieur du curseur 44a, il est disposé un interrupteur du type Reed 43a agencé pour se fermer lorsque l'aimant 38a se trouve en alignement radial avec lui. En 46a se trouve le buzzer commandé par 43a mais ici la commande a lieu un peu différemment. Il est prévu un relais 66 qui est excité lorsque le contact de 43a se ferme. Ce relais commande un contact de fermeture 67 qui assure son maintien excité après que le contact de 43a se soit ouvert lorsque l'aimant 38a cesse d'être en regard de 43a. Ainsi lorsque la température mesurée atteint, par exemple, 30° qui est la température correspondant à la position du curseur 44a sur la figure 13, l'aimant 38a actionne l'interrupteur 43a, le relais 66 est excité, le buzzer 46a fonctionne. Grâce au relais 66 ce buzzer continue de fonctionner même lorsque la température continue d'augmenter et que l'aimant 38a n'est plus en face du curseur 44a. L'usager est donc averti que la première température de fin de chauffage rapide est atteinte et, pour faire cesser le signal acoustique, il lui suffit d'appuyer sur un bouton 68, pour provoquer l'ouverture du circuit de maintien du relais 66. Si maintenant l'usager veut être averti lorsqu'une autre température est atteinte, par exemple 75° dans le cas de la fig. 13, il lui suffit de faire tourner le curseur 44a pour l'amener dans la position représentée en traits mixtes pour que le buzzer 46a fonctionne lorsque cette température de 75° est atteinte. On voit que cette forme d'exécution permet de fournir un signal acoustique pour la température choisie par l'opérateur.

**Revendications**

1. Dispositif thermométrique avertisseur acoustique pour couvercle de récipient de cuisson, comprenant un boîtier (11) formant bouton de couvercle, des moyens pour fixer ce boîtier à un couvercle (2), un élément thermométrique spiral bimétallique (27) disposé dans ce boîtier pour actionner un organe indicateur thermométrique porté par un équipage tournant (29, 30) monté à pivot dans ce boîtier et pour être actionné par l'élément thermométrique, au moins un aimant permanent (38) de commande monté mobile dans le boîtier (11), en fonction de la position angulaire de l'équipage tournant (29, 30) elle-même fonction de la température mesurée par l'élément thermométrique (27), caractérisé en ce que chaque aimant permanent (38) de commande est mécaniquement indépendant de l'élément thermométrique spiral bimétallique (27) et est monté mobile radialement dans le boîtier (11), en fonction de la position angulaire de l'équipage tournant (29, 30), elle-même fonction de la température mesurée par l'élément thermométrique (27), et en ce qu'il comporte au moins un capteur-avertisseur acoustique (44) prévu pour être commandé par l'action radiale dudit aimant (38) et en ce qu'il comporte une source de courant (45), un organe de signalisation acoustique (46) et un interrupteur électrique (43) disposé dans le circuit de la source (45) et de l'organe de signalisation (46) et dont un contact mobile est en matière ferro-magnétique et est prévu pour être actionné par l'aimant (38) lorsque celui-ci se trouve à une distance radiale prédéterminée de ce contact, et en ce que le capteur-avertisseur (44) présente des moyens pour l'adapter sur la périphérie du boîtier (11), pour qu'il donne un signal acoustique lorsque l'aimant (38) se trouve au moins temporairement à une distance prédéterminée de lui.

2. Dispositif selon la revendication 1, caractérisé en ce que l'aimant (38) est porté par un organe (37) monté sur un guide radial (36) solidaire du boîtier (11), en ce que l'équipage mobile (29, 30) présente une came (40) coopérant avec l'organe porte-aimant (37), pour faire varier la distance de cet organe (37) à la paroi du boîtier (11) en fonction de la position angulaire de cet équipage (29, 30), elle-même fonction de la température mesurée par l'élément thermométrique (27), le capteur-avertisseur (44) étant prévu pour être placé en regard du guide radial (36).

3. Dispositif thermométrique avertisseur acoustique pour couvercle de récipient de cuisson, comprenant un boîtier (11) formant bouton de couvercle, des moyens pour fixer ce boîtier à un couvercle, un élément thermométrique spiral bimétallique (27) disposé dans ce boîtier pour actionner un organe indicateur thermométrique porté par un équipage tournant (29a, 30a) monté à pivot (31b) dans ce boîtier et pour être actionné par l'élément thermométrique, au moins un aimant permanent (38a) de commande monté mobile dans le boîtier (11), en fonction de la position angulaire de l'équipage tournant (29a, 30a) elle-même fonction de la température mesurée par l'élément thermométrique (27), caractérisé en ce que chaque aimant permanent (38a) de commande est mécaniquement indépendant de l'élément thermométrique spiral bimétallique (27) et est monté mobile angulairement, étant porté par l'équipage mobile (29a, 30a), pour tourner en regard de la paroi du boîtier lorsque cet équipage tourne, en ce qu'il comporte au moins un capteur-avertisseur acoustique (44a) prévu pour être commandé par l'action sur lui dudit aimant (38a), ce capteur-avertisseur comprenant une source de courant (45), un organe de signalisation acoustique (46a) et un interrupteur électrique (43a) disposé dans le circuit de la source (45) et de l'organe de signalisation (46a) et dont un contact mobile est en matière ferro-magnétique et est prévu pour être actionné par l'aimant (38a) lorsque celui-ci passe en regard de ce capteur-avertisseur acoustique (44a) préalablement placé dans une position angulaire correspondant à la température de consigne du signal, et en ce que le capteur-avertisseur (44a) présente des moyens pour l'adapter sur la périphérie du boîtier (11), pour qu'il donne un signal acoustique lorsque l'aimant (38a) passe en regard de lui.

4. Dispositif selon la revendication 3, caractérisé en ce que le capteur-avertisseur (44a) comprend des moyens de maintien en fonction (66, 67) du signal acoustique après que l'aimant (38a) ait dépassé l'endroit où se trouve le capteur-avertisseur (44a), et un interrupteur (68) prévu pour être commandé par l'usager, pour faire cesser ce signal à volonté.

5. Dispositif selon la revendication 3, caractérisé en ce que l'organe capteur-avertisseur acoustique (44) présente des moyens pour sa fixation amovible sur le pourtour du boîtier (11) et pour être déplaçable à volonté sur ce pourtour.

6. Dispositif selon la revendication 1, caractérisé en ce qu'il comporte deux organes capteurs-avertisseurs acoustiques (44), pour signaler successivement que deux températures de consigne différentes sont atteintes chacune.

7. Dispositif selon les revendications 2 et 6, caractérisé en ce que la came (40) est en forme générale circulaire comprenant une rampe (41), commandant deux porte-aimants (39, 39a).

**Claims**

1. A temperature-sensitive acoustic warning device for the lid of a cooking vessel, comprising a housing (11) forming the knob of the lid, means for fixing this housing to a lid (12), a temperature-sensitive bimetallic spiral element (27), arranged in this housing, for actuating a temperature-sensitive indicator carried by a rotating element (29, 30) pivotally mounted in this housing, and for being actuated by the temperature-sensitive element, and at least one permanent control-magnet (38) displaceably mounted in the housing (11) according to the angular position of the rotating element (29, 30), which itself depends on the temperature measured by the temperature-sensitive element (27), characterized in that each permanent control-magnet (38) is mechanically independent of the temperature-sensitive bimetallic spiral element (27) and is mounted for radial displacement in the housing (11) according to the angular position of the rotating element (29, 30), which itself depends on the temperature measured by the temperature-sensitive element (27), in that it has at least one acoustic warning sensor (44) intended to be controlled by the radial action of the said magnet (38), in that it has an electricity supply (45), an acoustic signalling device (46) and an electric switch (43) which is located in the circuit of the supply (45) and of the signalling device (46) and of which a moving contact is made of a ferromagnetic material and is intended to be actuated by the magnet (38) when the latter is a predetermined radial distance from this contact, and in that the warning sensor (44) has means by which it can be fitted to the periphery of the housing (11) so that it gives an acoustic signal when the magnet (38) is at least temporarily a predetermined distance therefrom.

2. The device according to Claim 1, characterized in that the magnet (38) is carried by a member (37) mounted on a radial guide (36) firmly fixed to the housing (11), and in that the rotating element (29, 30) has a cam (40), interacting with the magnet-carrying member (37), for varying the distance between this member (37) and the wall of the housing (11) according to the angular position of this element (29, 30), which itself depends on the temperature measured by the temperature-sensitive element (27), the warning sensor (44) being intended to be placed opposite the radial guide (36).

3. A temperature-sensitive acoustic warning device for the lid of a cooking vessel, comprising a housing (11) forming the knob of the lid, means for fixing this housing to a lid, a temperature-sensitive bimetallic spiral element (27), arranged in this housing, for actuating a temperature-sensitive indicator carried by a rotating element (29a, 30a) pivotally mounted (31b) in this housing, and for being actuated by the temperature-sensitive element, and at least one permanent control-magnet (38a) displaceably mounted in the housing (11) according to the angular position of the rotating element (29a, 30a), which itself depends on the temperature measured by the temperature-sensitive element (27), characterized in that each permanent control-magnet (38a) is mechanically independent of the temperature-sensitive bimetallic spiral element (27) and is mounted for angular displacement, being carried by the rotating element (29a, 30a), so as to rotate opposite the wall of the housing when this element (29a, 30a) rotates, in that it has at least one acoustic warning sensor (44a) intended to be controlled by the action of the said magnet (38a) on it, this warning sensor comprising an electricity supply (45), an acoustic signalling device (46a) and an electric switch (43a) which is located in the circuit of the supply (45) and of the signalling device (46a) and of which a moving contact is made of a ferromagnetic material and is intended to be actuated by the magnet (38a) when the latter passes opposite this acoustic warning sensor (44a) previously placed in an angular position corresponding to the set temperature for the signal, and in that the warning sensor (44a) has means by which it can be fitted to the periphery of the housing (11) so that it gives an acoustic signal when the magnet (38a) passes opposite it.

4. The device according to Claim 3, characterized in that the warning sensor (44a) comprises means (66, 67) for prolonging the acoustic signal after the magnet (38a) has passed the point where the warning sensor (44a) is located, and a switch (68) intended to be controlled by the user in order to cut out this signal at will.

5. The device according to Claim 3, characterized in that the acoustic warning sensor (44) has means which enable it to be detachably fixed to the periphery of the housing (11) and moved at will around this periphery.

6. The device according to Claim 1, characterized in that it has two acoustic warning sensors (44) for successively signalling that each of two different set temperatures has been reached.

7. The device according to Claims 2 and 6, characterized in that the cam (40) is of circular general shape including a ramp (41), which controls two magnet-carrying members (39, 39a).

**Patentansprüche**

1. Temperaturgesteuerte akustische Warnvorrichtung für Deckel von Kochgefäss, welche aus einem Gehäuse (11) besteht, das den Halteknopf des Deckels bildet und mit Mitteln zum Befestigen dieses Gehäuses an einem Deckel (12), mit einem spiralförmigen Bimetall-Temperatur-Messelement (27), welches in diesem Gehäuse angeordnet ist und ein Temperatur-Anzeigeorgan antreibt, das von drehbaren Teilen (29, 30) getragen wird, die schwenkbar in diesem Gehäuse montiert sind und vom Bimetall-Temperatur-Messelement angetrieben werden und mit wenigstens einem Schalt-Permanentmagneten (38), der im Gehäuse (11), abhängig von der Winkellage der beweglichen Teile (29, 30), welche ihrerseits von der vom Temperatur-Messelement (27) gemessenen Temperatur abhängt, beweglich angeordnet ist, dadurch gekennzeichnet, dass jeder Schalt-Permanentmagnet (38) vom spiralförmigen Bimetall-Temperatur-Messelement (27) mechanisch unabhängig und radial bewegbar im Gehäuse (11), in Abhängigkeit von der Winkellage der beweglichen Teile, welche selbst von der durch das Temperatur-Messelement (27) gemessenen Temperatur abhängt, angeordnet ist, dass sie wenigstens eine akustische Warnervorrichtung (44) die durch die radiale Bewegung des genannten Permanentmagneten (38) geschaltet wird, sowie eine Stromquelle (45), ein akustisches Signalorgan (46) und einen elektrischen Unterbrecher (43), im elektrischen Kreis von Stromquelle und Signalorgan (46) umfasst, der einen magnetischen beweglichen Kontakt aufweist, der vom Permanentmagneten (38) betätigt wird, wenn dieser sich radial in einem vorgegebenen Abstand von diesem Kontakt befindet, und dass die Warnvorrichtung (44) Mittel aufweist, um sie an Rand des Gehäuses (11) anzubringen, sodass sie ein akustisches Signal abgibt, wenn sich der Permanentmagnet (38) wenigstens zeitweise in einem vorbestimmten Abstand von diesem befindet.

2. Vorrichtung nach Anspruch 1, dadurch gekennzeichnet, dass der Permanentmagnet (38) sich auf einem Organ (37) befindet, das in einer radialen Führung (36) der Gehäuses (11) geführt ist, und dass die beweglichen Teile (29, 30) einen Nocken (40) aufweisen, der mit dem Magnetträger (37) zusammenwirkt, um den Abstand zu diesem Träger (37) und der Wand des Gehäuses (11) in Abhängigkeit von der Winkelposition dieser Teile (29, 30), welche ihrerseits von der durch das Temperatur-Messelement (27) gemessenen Temperatur abhängig ist, verändert, und die Warnvorrichtung (44) der radialen Führung (36) gegenüberliegend angeordnet ist.

3. Temperaturgesteuerte akustische Warnvorrichtung für Deckel von Kochgefäss, welche aus einem Gehäuse (11) besteht, der den Halteknopf des Deckels bildet und mit Mitteln zum Befestigen dieses Gehäuses an einem Deckel (12), mit einem spiralförmigen Bimetall-Temperatur-Messelement (27), welches in diesem Gehäuse angeordnet ist und ein Temperatur-Anzeigeorgan antreibt, das von drehbaren Teilen (29a, 30a) getragen wird, die schwenkbar in diesem Gehäuse montiert sind und vom Bimetall-Temperatur-Messelement (27) angetrieben werden und mit wenigstens einem Schalt-Permanentmagneten (38a), der im Gehäuse (11), abhängig von der Winkellage der beweglichen Teile (29a 30a), welche ihrerseits von der vom Temperatur-Messelement (27) gemessenen Temperatur abhängt, beweglich angeordnet ist, dadurch gekennzeichnet, dass dieser Schalt-Permanentmagnet (38a) vom spiralförmigen Bimetall-Temperatur-Messelement (27) mechanisch unabhängig und winkelmässig beweglich montiert ist und von den beweglichen Teilen (29a, 30a) getragen wird, um bezogen auf die Gehäusewand zu drehen, wenn diese Teile drehen, dass wenigstens eine akustische Warnvorrichtung (44a) vorhanden ist, die durch die Wirkung des genannten Permanentmagneten (38a) geschaltet wird, wobei die Warnvorrichtung eine Stromquelle (45) und ein akustisches Signalorgan (46a) enthält, und dass ein beweglicher, ferromagnetischer Kontakt vorhanden ist, der vom Magneten (38a) geschaltet wird, wenn dieser gegenüber der akustischen Warnvorrichtung (44a), welche zuvor in einer Winkellage angebracht wurde, die der Lage bei Alarmtemperatur entspricht, und dass die Warnvorrichtung (44a) Mittel zum Anpassen an die Aussenwand des Gehäuses (11) aufweist, sodass diese ein akustisches Signal abgibt, wenn der Magnet (38a) dieser gegenüberliegt.

4. Vorrichtung nach Anspruch 3, dadurch gekennzeichnet, dass die Warnvorrichtung (44a) Mittel (66, 67) enthält, welche das akustische Signal aufrechterhalten, nachdem der Magnet (38a) den Bereich, wo sich die Warnvorrichtung (44a) befindet, durchlaufen hat und mit einem Schalter (68), der vom Anwender betätigt werden kann, um das Signal abzuschalten.

5. Vorrichtung nach Anspruch 3, dadurch gekennzeichnet, dass das akustische Organ der Warnvorrichtung (44) Mittel für das verstellbare Befestigen am Umfang des Gehäuses (11) und zum beliebigen Verschieben auf diesem Umfang aufweist.

6. Vorrichtung nach Anspruch 1, dadurch gekennzeichnet, dass diese zwei akustische Warnvorrichtungen (44) umfasst, um aufeinanderfolgend je anzuzeigen, wenn eine von zwei verschiedene Temperaturen erreicht ist.

7. Vorrichtung nach den Ansprüchen 2 und 6, dadurch gekennzeichnet, dass der Nocken (40) eine Kreisform mit einer Schräge (41) aufweist die zwei Magnetträger (39, 39a) steuert.

# FIG.1

# FIG.2

# FIG. 3

23b

11

18

20 26b 28 27      14   20   19

# FIG. 4

18.

11

44.   49.

30 40 50 60 70 80 90 100 0 10 20

**FIG. 5**

**FIG. 6**

**FIG. 7**

**FIG. 8**

**FIG. 9**

3

# FIG.10

# FIG.11

# FIG.12

# FIG.13